# EUROPEAN PATENT APPLICATION

(11) **EP 4 531 029 A1**
(43) Date of publication of application: **02.04.2025**
(21) Application number: 23465546.2
(22) Date of filing: 29.09.2023
(51) Int. Cl.: G09G 3/00, G02B 27/01

(54) **HEAD-UP DISPLAY**

(71) Applicant: Continental Automotive Technologies GmbH, 30175 Hannover (DE)
(72) Inventor: Pasca, Andrei, 60488 Frankfurt am Main (DE)
(74) Representative: Continental Corporation

(57) **Abstract**

The invention is directed to a head-up display having a display apparatus (1) with a picture generating unit (10) with a display panel (11) for displaying an image and a driver (12) for the display panel (11), an optical unit (14) for projecting the image onto a projection surface (2,20), an image generator (41) for generating an image (BD) to be displayed, a transmission channel (43) using a failsafe image data format, a timing controller (45), and a panel connection (47) for connecting the transmission channel (43) to the driver (12). It is suggested that an occlusion detector (16) is provided and that the occlusion detector (16) is arranged downstream the timing controller (45).

## Description

The invention is directed to a head-up display.

From WO 2023/030593 A1 a head-up display having a display apparatus is known having a picture generating unit with a display panel for displaying an image and a driver for the display panel, an optical unit for projecting the image onto a projection surface, an image generator for generating an image to be displayed, a transmission channel using a failsafe image data format, a timing controller, and a panel connection for connecting the transmission channel to the driver.

From US 2022/0366818 A1 a head-up display with brightness control / transparency monitoring is known. It suggests placing a brightness monitoring device between a display element and a driver for this display element. This placement reduces potential malfunctions in a case where a failure prone transmission mode is used. Using a failsafe transmission mode, like the so-called VESA standard avoids the need for such downstream failure effect prevention: A human user will either clearly detect a failure and will turn off the head-up display. Or the human user does not recognize effects of a failure at all.

The inventor of the present invention found that in the case of an object to be displayed being slightly below an occlusion threshold and this threshold is exceeded due to a failure that occurred in the transmission channel, then the human user will not recognize that a safety critical situation may occur. The inventor found that such situation may occur although a failsafe transmission mode is used. Thus there is a need to cope with such situation.

According to the invention, a downstream occlusion detection is suggested despite using a failsafe transmission mode that usually avoids safety critical situations caused by a failure in the transmission channel. According to the invention an occlusion detector is provided, and the occlusion detector is arranged downstream the timing controller. This has the advantage to increase overall safety by cost efficient means.

Preferably the occlusion detector is arranged downstream the driver. This has the advantage that even failures that may happen at the stage of the driver will be taken into account and negative effects caused by such failures will be avoided.

Preferably the failsafe image data format is the so-called VESA bitmapping. This has the advantage that most failures are avoided using this image data format, and that those failures that cannot be avoided by using this image data format are reliably detected by an occlusion detector according to the invention.

Further features of the present invention will become apparent from the following description and the appended claims in conjunction with the figures.

Overview of the figures:
- Fig.1: schematically shows a head-up display with a display apparatus according to the invention;
- Fig.2: shows an exemplary view of outside objects as seen by a user of a head-up display
- Fig.3: shows an exemplary view of virtual objects generated by a head-up display
- Fig.4: shows an exemplary view of outside objects overlaid by virtual objects as seen by a user of a head-up display
- Fig.5: shows an exemplary view of a real world scene;
- Fig.6: shows an exemplary approach for occlusion detection;
- Fig.7: shows an exemplary image generation, processing and transmission chain;
- Fig. 8: shows another exemplary image generation, processing and transmission chain;
- Fig.9: shows a bit allocation table;
- Fig. 10: illustrates the situation for a failure of a certain type;
- Fig. 11: illustrates a real system;
- Fig. 12: depicts an optimum placement for an occlusion detection module;

For a better understanding of the principles of the present invention, embodiments of the invention will be explained in more detail below with reference to the figures. The same reference signs will be used in the figures for identical or functionally identical elements and are not necessarily described again for each figure. It is to be understood that the invention is not restricted to the illustrated embodiments and that the features described can also be combined or modified without departing from the scope of protection of the invention as defined in the appended claims.

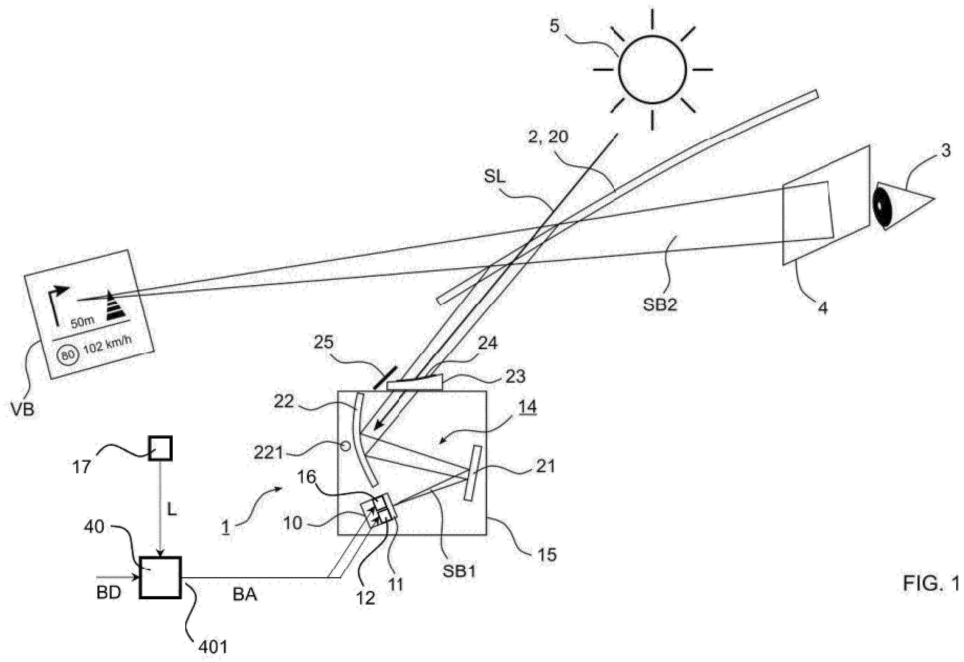

Fig. 1 schematically shows a head-up display with a display apparatus according to the invention. The head-up display has a display apparatus 1 with a picture generating unit 10 and an optical unit 14. A beam SB1 emanates from a display panel 11 and is reflected by a folding mirror 21 onto a curved mirror 22 that reflects it in the direction of a mirror unit 2. The mirror unit 2 is illustrated here as a windshield 20 of the motor vehicle. From there, the beam SB2 travels in the direction of an eye of a user 3.

The user 3 sees a virtual image VB that is located outside the motor vehicle above the engine hood or even in front of the motor vehicle. Due to the interaction of the optical unit 14 and the mirror unit 2, the virtual image VB is an enlarged representation of the image displayed by the display panel 11. A speed limit, the current vehicle speed, and navigation instructions are symbolically represented here. As long as the eye of the user 3 is located within an eyebox 4, indicated by a rectangle, all elements of the virtual image VB are visible to the user 3. If the eye of the user 3 is outside the eyebox 4, the virtual image VB is only partially visible to the user 3 or not at all. The larger the eyebox 4 is, the less restricted the user is when choosing their seating position.

The curvature of the curved mirror 22 is adapted to the curvature of the windshield 20 and ensures that the image distortion is stable over the entire eyebox 4. The curved mirror 22 is rotatably mounted by means of a bearing 221. The rotation of the curved mirror 22 that is made possible thereby makes it possible to displace the eyebox 4 and thus to adapt the position of the eyebox 4 to the position of the user 3.

The folding mirror 21 serves to ensure that the path travelled by the beam SB1 between the display panel 11 and the curved mirror 22 is long and, at the same time, that the optical unit 14 is nevertheless compact. The picture generating unit 10 and the optical unit 14 are delimited with respect to the environment by a housing 15 having a transparent cover 23. The optical elements of the optical unit 14 are thus protected for example against dust located in the interior of the vehicle. An optical film or a polarizer 24 is furthermore located on the cover 23. The display panel 11 is typically polarized, and the mirror unit 2 acts like an analyser. The purpose of the polarizer 24 is therefore to influence the polarization in order to achieve uniform visibility of the useful light. An anti-glare protection 25 serves to reliably absorb the light reflected via the interface of the cover 23 so that the user is not dazzled. In addition to the sunlight SL, the light from another stray light source 5 may also reach the display panel 11. In combination with a polarization filter, the polarizer 24 can additionally also be used to reduce incident sunlight SL.

Further dazzling of the user may occur if the virtual image VB generated by the display panel 11 is much brighter than the ambient brightness. In that case, the eye of the user has adjusted to a low brightness and is dazzled by the virtual image VB if the latter has not been adapted. For this purpose, a light sensor 17 is provided, which captures the ambient brightness and supplies a corresponding signal to the image control unit 40. The latter then adapts the brightness values of the image points of an image BD to be represented and outputs an adapted image signal BA at its image signal output 401. Said image signal BA is supplied to a driver 12 controlling the display panel 11. In addition, the image signal BA is supplied to an occlusion detection module 16. The latter monitors whether objects of the image to be displays covers a too large area and initiates a suitable reaction. In the simplest case, this reaction consists of switching off the display panel 11 so that it does not emit light, no matter what image signal BA is present. In that case, a malfunction of the light sensor 17 or of the image control unit and any occurring changes in the brightness value of the image points of the image signal BA on signal transmission paths do not result in the user being dazzled. The image control unit usually is part of an image generator.

A Head-up Display, also referred to as HUD in the following, is used to place information in the field of view of the user 3 in such a way as to appear integrated in the surrounding environment. The intention is to provide the information in a way that does not require the user to significantly change the eye gaze direction and / or focus distance.

HUDs are of particular importance in avionics and the automotive fields where they allow the vehicle's operator to glance important aspects of the trip without taking the eyes away from the path ahead. For this purpose, state of the art HUDs are required to deliver this information clearly discernible, independent of the ambient light level. This translates in high brightness requirements for the virtual image VB produced by the HUD.

At the same time, very bright images generated by the HUD may pose particular risks for the safety of the vehicle as they may cover critical objects from the field of view of the user 3.

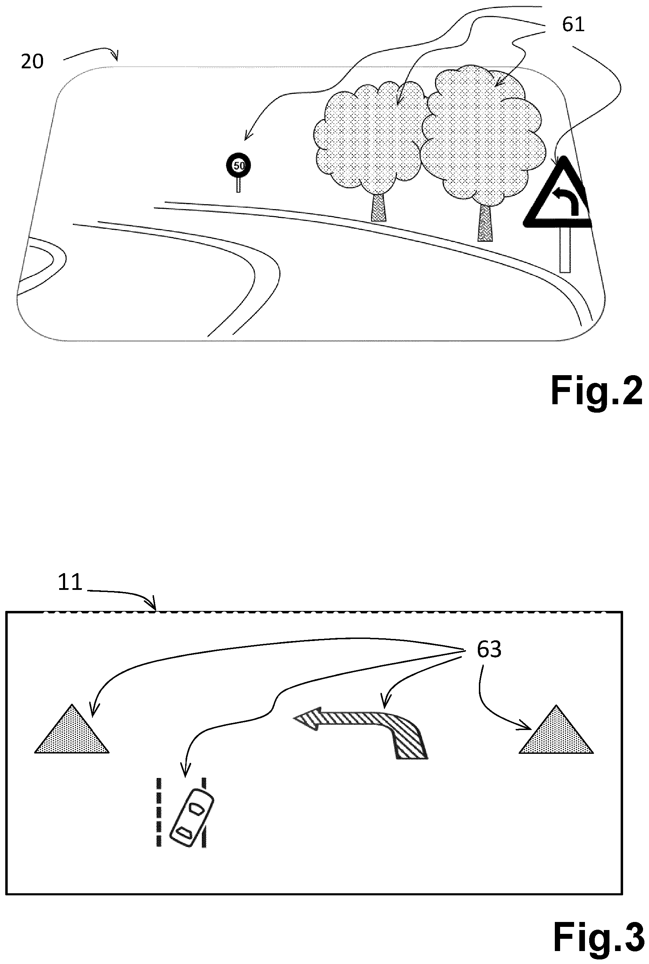

As seen in Fig.2, a driver of an automotive vehicle, the user 3, should have an unobstructed view of real world objects 61 in front of the vehicle - e.g. road signs, obstacles, the path to follow.

Over this field of view, the HUD system overlays some virtual objects 63 generated by an image generating unit, like those shown in Fig.3. These virtual objects 63 may provide useful information to the driver, for instance the direction to follow given by a navigation system or warnings such as the car is about to cross the lane boundary, or some cosmetic image features to align the appearance of the generated images with the general design philosophy followed by the designers.

Fig.3 depicts conceptually a possible HUD image as seen on the display panel 11 used for the construction of the system. It should be clear to anyone skilled in the art that the previous image is only a simplification used for illustration purposes, ignoring details that are unessential for the present invention.

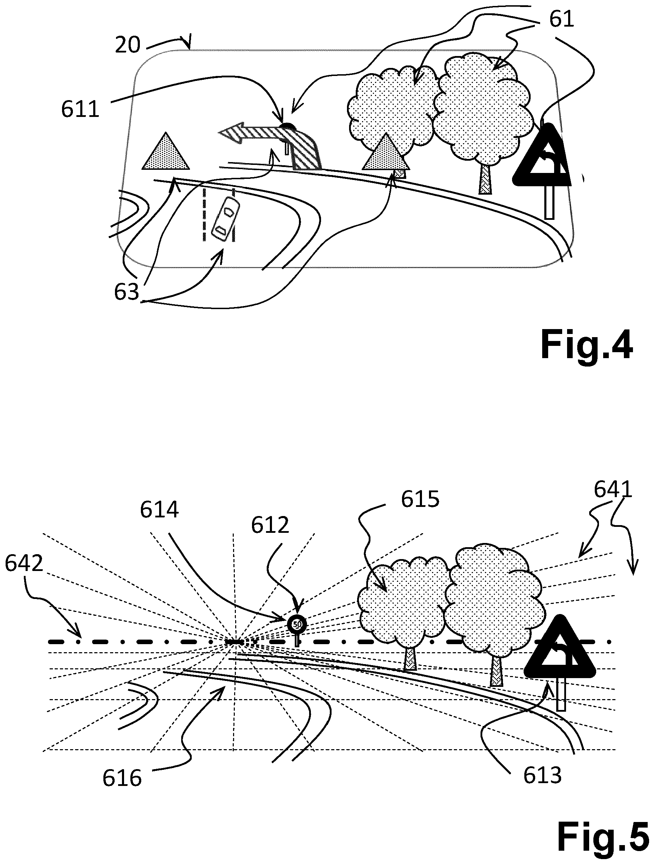

When the Head-up Display system is switched in the operating mode, the images that are shown on the display panel 11 will be overlayed on the real world and presented to the user 3 as virtual objects 63 hovering at a certain distance in front of the vehicle, as seen in Fig.4.

An important aspect that can be retained from Fig.3 is that some objects 63 generated by the HUD system can overlap critical objects 611 from the real world, like the speed limit indicator from the previous figures. For the situation depicted in Fig.3, the navigation arrow indicating a left turn, from the user's 3 perspective, occludes a critical object 611 from the scene existing in front of the vehicle.

For safety reasons, situations like this need to be avoided in the operation of the HUD system. However, it should be noted that not all occlusions are posing the same risks. An important factor that must be taken into consideration is given by the position of the occluded objects in the field of view. As depicted in Fig.5, illustrating schematically a real-world scene onto which perspective lines 641 are drawn for visual guidance. Objects 613 that are close the vehicle (i.e. in the foreground) appear larger than objects 614 which are further away (i.e. in the background). For this reason, the left turn indicator shown in Fig.5 has a larger dimension than the speed limit indicator from the background.

Because of this, if a HUD generated virtual object 63 occludes a foreground object 613, the risk for the safety of the vehicle is reduced as only a minor fraction of the real-world object 613 is obscured and the user 3 my still easily recognize the real object 613 and act accordingly to its significance (e.g., just some examples, prepare for a left turn as depicted in the figure, prepare to act on the brake system if a pedestrian is engaging in a street crossing).

Another important factor that must be taken into consideration is the position of the real-world object 61 in relation to the horizon 642. Objects 615 appearing above the horizon 642 typically don't pose an immediate risk for the vehicle as they are typically tall enough to pass over the vehicle without a physical contact. Because of this, the requirements for the occlusion detection module 16 covering the regions above the horizon 642 are more relaxed.

Objects 616 appearing below the horizon 642 may pose a risk (like collision) to the vehicle. However, for real world scenes, objects that are below the horizon 642 are, by definition, closer to the vehicle. In fact, the lower the object 616 relative to the horizon 642, the closer the object to the vehicle.

As seen in the perspective image of Fig.5, objects 613 closer to the vehicle appear larger to the user 3 so occluding objects generated by the HUD system are less likely to obscure the entire object 613 such as to render it invisible or unrecognizable to the user 3.

Finally, objects that are close to the horizon 642 can pose a risk if they are obscured, especially if they are in the background of the real-word scene. For instance, road signs by the side of the road, appearing in the distance, are seen as smaller and close to the horizon 642. Other examples of critical objects can be a concrete barrier blocking the lane in the distance, or the backside of a stationary vehicle in a traffic jam. Considering the full stop braking distance from highway speeds and the user's 3 reaction times, it is essential for the user 3 to see these kinds of objects as far away as possible. However, if the objects are far away, they appear smaller to user 3 and hence, the images generated by the HUD system can easily obscure them.

For this reason, special attention must be given by the occlusion detection module 16 to objects in the image generated by the HUD system that appear close to the horizon 642.

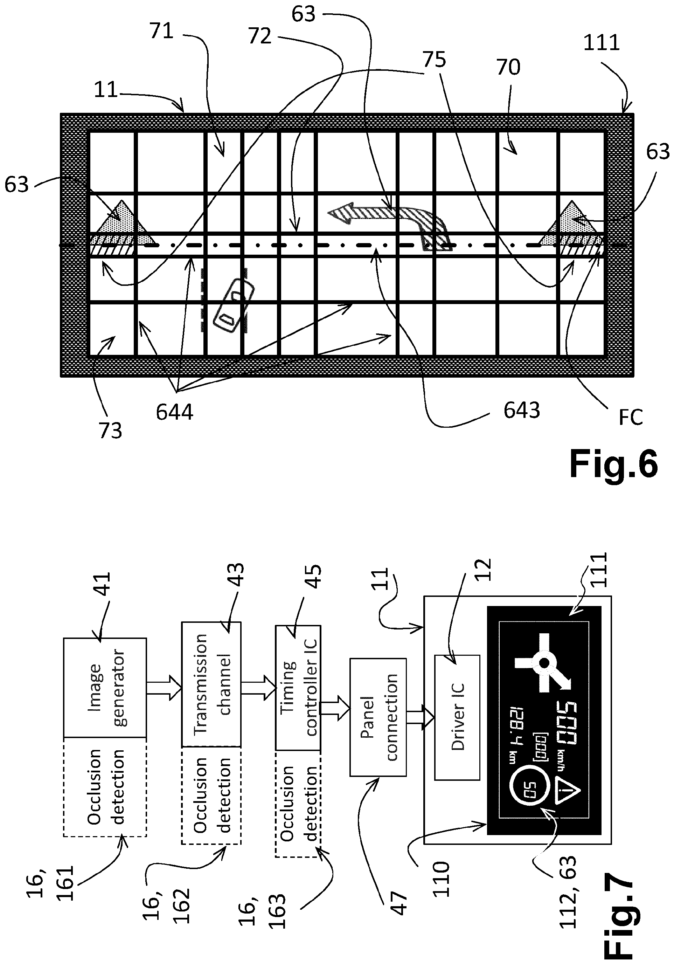

Fig.6 depicts a possible approach for the occlusion detection module 16 to take into consideration all the above topics.

The figure depicts in a simplified fashion the appearance of an image on the display panel 11 that is used inside the HUD system. As a note, typically, only a limited area of the display panel 11 is effectively used for the generation of the image that is to be shown to the user 3. The unused panel area 111 close to the border of the panel 11 is typically used for the calibration process like fine adjustment of the image position to compensate electronically the inherent mechanical alignment errors.

For ease of understanding of the occlusion detection module 16, the image that is to be displayed is covered by a grid 644 that partitions the image into several zones 70. It should be clear to anyone skilled in the art that this partitioning is only a virtual process and no lines are effectively drawn on the panel 11.

Also depicted in the figure is a display reference line 643 that ideally should coincide with the horizon 642 when the image generated by the HUD system is overlain on the real-world scene. Again, it should be clear to anyone that this line is shown only as visual aid for the description of the occlusion detection problem and not as an object that is drawn on the display panel 11.

As it can be seen, the system partitions the image in several zones 70 in a Manhattan-like fashion, with vertical and horizontal parallel lines. The depicted reference line 643 falls also into this pattern, running parallel to the grid 644 lines defining the occlusion detection zones 70.

For each individual zone 70 the occlusion detection module 16 looks for the fraction FC of the image BD that is covered by objects 63. If only a small fraction of an image zone 70 is covered by one or several objects 63 that are generated by the HUD system, then the risk is considered to be low. However, if an important fraction of the tested zone 70 is covered by objects 63 from the image, then the risk is considered high and the occlusion detection module 16 flags these zones 70 as risk zones 75. Fig.6 contains two such risk zones 75, represented with a slanted hash fill where a fraction FC close to 50% of the zone 75 area is covered by objects 63.

However, the size of the zones 70 differs based on the position of the zone 70. That is, zones 72 that are close to the horizon 642 (i.e. they appear as crossed by the reference line 643 in the figure) are typically smaller than other zones 71,73. Both zones 75 marked as with risk by the occlusion detection module 16 in the figure are zones 72 close to the horizon 642.

Zones 71 from the area of the display panel 11 that correspond to regions above the horizon 642 typically have a larger area as, already stated, they cover objects that are above the ground for which the safety risk is considered lower. In these regions, in order to trigger an occlusion error, the occluding object generated by the HUD must be larger compared to objects 63 generated close to the horizon 642. For instance, assuming a detection threshold of 30% of the zone covered by an object, it is clear that if the area of the tested zone is increased, also the area of the corresponding object must be increased in order to trigger an event.

Similarly, the zones 73 that are below the horizon 642 line also can have a larger area as they cover real-world objects that are closer to the user 3, hence, objects that appear larger to the user 3. Again, for a given fraction of the area that is covered by objects 70 in a zone, the larger the area of the zone 70, the larger the area that is covered by objects in the same zone 70 can be.

Another important aspect with respect to the occlusion detection is the position of the occlusion detection module 16 in the image generation, processing and transmission chain. Fig.7 depicts a possible configuration for the system, highlighting typical positions 161,162,163 in which the occlusion detection module 16 is located.

The left part of the image from Fig.7 depicts an image generator 41 block. This block is typically part of a graphic controller and is responsible for the creation of the image that must be presented to the user of the vehicle by the HUD system. It usually includes or is part of the image control unit 40 mentioned above.

This generated image is then transmitted towards the head-up display system via a transmission channel 43. It should be noted that this transmission channel 43 can be a passive channel (e.g. formed as traces on a printed circuit board or as wires in an automotive wiring harness) or an active transmission channel which involves the presence of additional signal processing circuitry that converts the data stream into formats more suited to be transmitted over the physical transmission layer. For instance, the transmission channel 43 may contain at the side close to the image generator 41 a device that converts the data stream from a parallel format in which several signal wires carry the information given by the image generator into a serial format in which the data stream is transported over a single coaxial cable and another device that converts back from the serial format to an appropriate format for the image receiver (that is, the display panel 11) placed at the other side of the transmission channel 43.

The data information is fed by the transmission channel 43 into a timing controller 45, in the following sometimes also referred to as TCON, device which recovers the effective image data from the data stream. The data recovered by the timing controller 45 is then sent towards the display panel 11 via the panel connection 47. On the display panel 11, the data is processed by the driver 12 integrated circuit and converted to appropriate signals to drive the pixels on the display panel 11. The display panel's 11 active area 110 includes a centre area 112 with objects 63 and is surrounded by an unused panel area 111. The objects 63 are shown upside down and inverted, as they will be reflected by the windshield 20 and then correctly appear as virtual image VB to the user 3.

As a note, the configuration shown is not the only possible configuration and it should be clear to anyone skilled in the art that departures from the depicted diagram do not represent implementations that are not according to the present invention.

For instance, the timing controller device 45 may be integrated in the same device as the driver 12 circuit, both placed on the display panel 11. Additionally, although the figure depicts the driver 12 IC as placed on the display panel, it should be noted that the word panel as used here should be understood in a broader sense. That is, the integrated circuit may be placed on a flexible printed circuit that is affixed to the display panel 11 without changing in any way the functionality of the entire system.

As seen in the figure, the occlusion detection module 16 typically is placed in one of the positions 161,162,163 depicted in the figure. In general, the occlusion detection circuitry 16 is placed inside a device that performs other operations on the image. One of the preferred positions of the state of the art is a position 161 inside the image generator 41. This is because the image generator 41 contains a graphic controller which has sufficient processing power to also perform the operations needed for occlusion detection. This implementation typically does not need additional hardware resources as the detection is implemented as a software module that operates on the graphic controller.

Another possible position 163 is inside the timing controller 45 of the head-up display system. Again, this position 163 is also seen as natural as the TCON 45 IC typically performs some form of image processing. Combined with the rest of the circuitry of the TCON 45, the additional circuitry used for the occlusion detection module 16 does not increase significantly the complexity or the circuit's area of the TCON 45 and hence, has only a small impact on the final system costs.

Finally, another typical position 162 for the occlusion detection module 16 is inside the transmission channel 43, more precisely in the devices used for an active transmission channel 43. This placement allows an easy addition of the occlusion detection module 16 in already existing products which were not designed from the beginning with this function.

For instance, the functionality is added to an already existing car line by making an update of the head-up display system only. The more complex system, that is the image generator 41 unit, remains unchanged and thus the overall costs for the implementation are optimized. At the HUD system part, typically the timing controller 45 is placed directly on the display panel 11 alongside the driver IC. If the occlusion detection function must be added inside the timing controller 45, that will mean a change of the display panel 11 itself. Typically, such changes are more expensive than a change in the rest of the system as it involves e.g. the display panel's 11 manufacturer and the TCON's 45 producer. For this reason, placing the occlusion detection module 16 inside the transmission channel 43 appears as a cost effective solution for already existing platforms that must be updated.

Of course, for real systems it is perfectly possible that several timing controllers 45 exist in the same time or that the occlusion detection module 16 is present in more than one position 161,162,163 but it should be clear to anyone skilled in the art that such combinations do not represent a departure from the scope of the present invention.

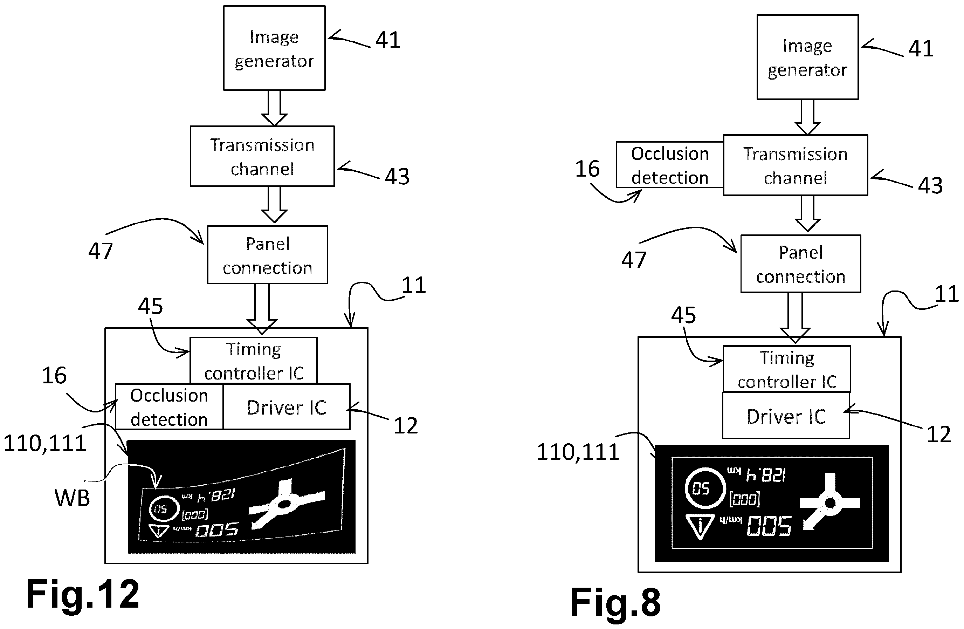

An important drawback of known HUDs, as it will be explained here, is that all typically used positions for an occlusion detection module 16 are sub-optimal with respect to the safety of the product. Fig.8 can be used as a starting point for the description of the issue.

Fig. 8 presents a system similar with that of the previous figures, in which the timing controller 45 is placed alongside the driver 12 IC on the display panel 11 and the occlusion detection module 16 is placed in the circuitry of the transmission channel 43.

The figure depicts also that a failure is present in the panel connection 47 block. This failure can be a hardware failure, for instance, one of the signal traces used for the connection between the transmission channel 43 and the display panel is short-circuited to a potential close to that of the power supply of the display panel. Such a short circuit may not pose a problem from the hardware reliability point of view (that is, the display panel 11 can tolerate indefinitely the voltage level present at the line which is short circuited or the device from the transmission channel 43 can operate without damage even if one of its output lines is pulled to a fixed potential that is higher than the normal one.

For instance, if the interface of the display panel 11 is according to the oLDI standard (one of the currently preferred standards for display panel 11 connection), the image data is vehiculated over differential pairs with electrical characteristics according to the LVDS standard. A driver circuit from the transmission channel 43 according to this LVDS standard typically has an output current which is limited by design to a specific level so a short circuit of one of its outputs to a fixed level may be tolerated indefinitely without damaging the circuit. Similarly, at the receiver side, if the potential seen on the line that is affected by the short circuit still falls inside the allowable voltage range for the standard LVDS receiver, the circuit can operate indefinitely without damage.

However, even if the system is able to operate without physical damage in these conditions, the data that is transmitted over the affected differential pair is irremediably corrupted.

For a differential interface, the driver circuit creates a potential difference between two signal lines according to the signal level that must be transmitted. The receiver looks at the potential difference between the same lines and based on the sign of the potential difference takes the decision about what type of data it received.

For instance, for a digital high level, the driver places a known voltage level on the first line of the differential pair and a known, but lower voltage on the other line from the differential pair. The receiver will look at the potential difference and will notice a positive difference. For a positive difference, the receiver will interpret the received data as being a logical high level.

For a logical low level, the driver will place the lower voltage on the first line from the differential pair and the higher one on the second line. This time, the receiver will notice a negative difference between the lines of the differential pair and hence will interpret the data as a logical low level. If the first line of the differential pair is short-circuited to a potential that is higher than both normal voltages, the receiver will always see a positive difference between the lines from the differential pair, irrespective of the level present on the second differential line. With this, the receiver will always see a logical high level as being transmitted over that differential pair. This type of physical error is called as signal stuck at high (or similar wording, using other accepted synonyms).

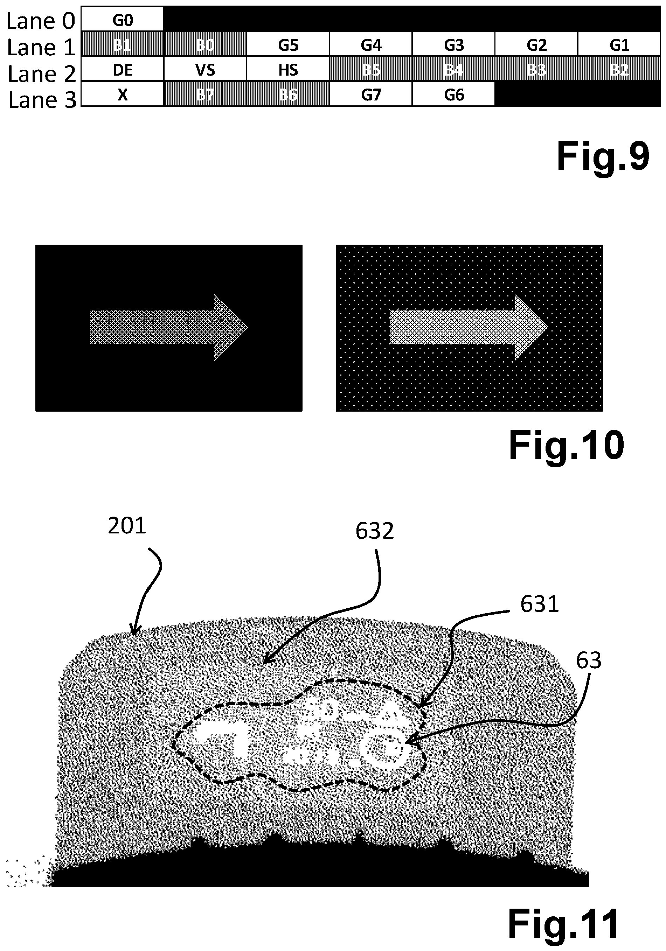

Getting back to the oLDI standard, one of the defined configurations for the logical layer is as depicted in the table shown in Fig.9. According to the oLDI standard, using the so-called VESA bit mapping for 24 bits per pixel image format, the interface uses four LVDS differential pairs called lane 0, lane 1 and so forth up to lane 4 to transport the image data, plus one additional differential pair for the transportation of the clock signal. This additional differential pair is not depicted in the table as it has no impact with respect to the present invention.

The image data has a format of 24 bits per pixel - that is, 24 bits are used to represent the color and brightness information for each pixel. Out of these 24 bits, 8 bits are used to represent the information for the red part of the pixel, 8 bits are used to represent the information for the green part of the pixel and finally, the rest of 8 bits are used for the information of the blue part of the pixel. Using standard notation, the higher the bit number, the higher its weight in the final digital value - this means that a bit numbered with 0 has the least impact and is called the least significant bit (LSB) while the bit numbered with 7 has the largest impact on the final value and is called the most significant bit (MSB). In a more relaxed terminology, also the adjacent bits to the LSB or to the MSB may be called using the same names - that is it is possible to say that bits numbered with 1 and 0 are the LSBs or that bits numbered with 5, 6 and 7 are the MSBs.

As can be seen from the table of Fig.9, in this particular bit allocation of the oLDI standard, lane 0 is used to carry the information for bits numbered from R0 to R5 of the red information and the LSB of the green information. Lane 1 is used to transport bits numbered G1 to G5 of the green colour information and the LSBs B0 and B1 of the blue channel.

Lane 2 is used to carry bits B2 to B5 of the blue colour information and the synchronization signals called HS, VS and DE. Finally, lane 3 is used for the transportation of the MSBs of each color channel, namely the bits numbered B6,B7, G6,G7, and R6,R7.

If a failure happens for lane 3, since the MSBs B6,B7, G6,G7, and R6,R7 of the colour channels are affected, the received image will be substantially affected and the end-user 3 will understand that the HUD system has a failure and is unusable.

If a failure happens for lane 2, since this lane carries the image synchronization signals HS, VS and DE, the display panel 11 is no longer able to properly receive the image data (a situation that is typically detected by the HUD system) and so no image can be displayed to the user 3.

However, if a failure happens in lane 0 or lane 1, depending on the familiarity of the end user 3 with the HUD system or with the environmental operating conditions (e.g. illumination of the real-world scene) the end user 3 may not identify the presence of a failure in the system.

Fig. 10 illustrates the situation for a failure of type lane 1 stuck at high, shown on the right side, compared to the normal operation, shown on the left side. In normal operation, the image that is generated by the HUD system has a black background and shows a symbol, lets say of a blueish colour (like 63 code for the red channel, 0 for the green channel and 255 code for the blue channel).

If lane 1 is stuck at 1, the image that is generated by the HUD will no longer have a black background but a very dark green (as all green bits from 1 to 5 will be set to 1). The colour channel for the black background will be seen by the display as being 0 for the red channel, 62 for the green channel and 3 for the blue channel. In addition, the shown symbol will be of a slightly brighter colour having 63 digital code for the red channel, 62 for the green channel and 255 for the blue channel. It is possible to notice the difference between the two symbols in the green colour channel.

For the end user 3, the dark green background may be barely visible as a slightly greenish "postcard" effect in the image, as depicted in Fig. 11.

Fig. 11 illustrates a real system. Note that in the depiction the HUD screen is represented by a transparent medium called combiner 201 but it should be clear to anyone skilled in the art that the actual physical implementation of the optical system of the HUD has no impact on the ideas put forth in the present invention. The virtual objects 63 are arranged in a symbol area 631, but the background colour extends up to an edge 632. This edge 632 of the greenish background area defines a rectangular area which is often referred to as "postcard", thus the visibility of the edge 632 of such rectangular area is referred to as postcard effect.

The greenish "postcard" area may not be disturbing or even noticeable to the end user 3 so it may go by unobserved. However, the slight increase in the brightness of the shown objects 63 may be sufficient such that the objects 63 should now be considered as possibly occluding real-world objects. A possible situation where this can arise is when the designer of the virtual objects 63 that are shown by the HUD system wanted a symbol to be as bright as possible but still not bright enough that it can really occlude outside objects. In this situation, the brightness of the object 63 is designed to be slightly below an occlusion detection limit THR.

However, since the depicted failure slightly increases the brightness of the virtual object 63, the new brightness may be above the threshold THR of the occlusion detection module 16 and an event should be triggered by the occlusion detection module 16 for this situation.

By inspecting Fig.8 for the described system where a failure is present in the panel connection part 47, it is clear that this failure is not covered by the occlusion detection module 16, even if it should be. This happens as the failure happens after the location of the occlusion detection module 16.

The same is true also if the occlusion detection module 16 is located inside the image generator 41 as, again, the failure happens after the detections. Even for systems having the occlusion detection module 16 located in the timing controller 45, there may be some possible failure modes in which the brightness of the image is slightly altered, and parts of the image should be flagged as occlusions.

The present invention provides a solution for the described drawbacks of the prior art, that is, the failure to detect possible occlusions in the presence of faults upstream of the display panel 11 of a HUD system.

As was already described, the position of the occlusion detection module 16 is important for the proper detection of the regions from the HUD generated image which may occlude real-world objects.

By identifying the possible failure points, it can be seen that the optimal position for the occlusion detection module 16 is as close as possible to the display panel 11. The closer to the display panel 11, the less risk for system failure that result in image alterations to pose problems for the end-user 3 via the generation of occluding virtual objects 63.

The optimal position from a system's perspective is to have the occlusion detection module 16 placed inside the driver 12 IC from the display panel 11.

It should be clear to anyone skilled in the art that the phrase driver 12 IC from the display panel must be understood in a broader sense and does refer specifically to the configuration into which an integrated display driver 12 circuit is bonded directly on the display panel 11 as the circuit may be placed on a flex foil or directly produced on the display panel 11 using the same process used for the manufacturing of the display.

Fig. 12 depicts this optimal placement for the occlusion detection module 16. The figure depicts a system configuration in which the timing controller 45 IC is placed directly on the display panel 11 but any other placement of the timing controller 45 is possible without departing from the scope of the present invention as long as the occlusion detection module 16 is built into the display driver 12 IC.

The figure depicts the timing controller 45 as being located on the display panel 11 to highlight that even for situation where the timing controller 45 and the display driver 12 are constructed as blocks in a single inseparable device, the occlusion detection module 16 should be included in the circuitry downstream of the circuitry performing the operations of the timing controller 45 functions. This means that the occlusion detection module 16 should be placed in a location downstream of all image processing operations performed by the display driver 12 IC, for example, but without being limited to this list, image decompression, image decryption, colour correction, white point calibration, image warping or others.

For optimal performance of the occlusion detection block 16, the operations that are performed downstream of the occlusion detection block 16, if any, should be only operations strictly needed for the physical operation of the display panel 11, without which it is not possible to operate correctly the display. Typically, such operations are done at a pixel level, preferably only at a subpixel level, like the conversion of digital codes into voltage levels needed for the direct driving of the pixels from the display's active area.

By having the occlusion detection module 16 placed downstream of the last timing controller 45 device, inside the display driver 12 circuit, the occlusion detection is capable of identifying potential problems that can arise from failures happening anywhere on the data path from the image generator 41 towards the display panel 11 of the HUD system. For the state of the art solutions this is not always possible as was already depicted. On the active area 111 a warped image WB is shown. Such warped or pre-distorted image WB is often used to compensate for distortions caused by optical elements of the head-up display.

The invention may also be applied to near-eye displays, to augmented reality head-sets, or to head-up applications in non-automotive fields. A first embodiment for a system according to the present invention, as was already presented with regard to Fig. 12, is given by the position of the occlusion detection module 16 directly on the display panel 11 as part of the display driver 12 IC, after all image processing was performed in other circuitry placed upstream the display driver 12.

## Claims

1. Head-up display having a display apparatus (1) with
- a picture generating unit (10) with a display panel (11) for displaying an image and a driver (12) for the display panel (11),
- an optical unit (14) for projecting the image onto a projection surface (2,20),
- an image generator (41) for generating an image (BD) to be displayed,
- a transmission channel (43) using a failsafe image data format (),
- a timing controller (45), and
- a panel connection (47) for connecting the transmission channel (43) to the driver (12),
wherein an occlusion detector (16) is provided and the occlusion detector (16) is arranged downstream the timing controller (45).

2. Head-up display according to claim 1 wherein the occlusion detector (16) is arranged downstream the driver (12).

3. Head-up display according to one of the preceding claims, wherein the failsafe image data format is the so-called VESA bitmapping.
